# EUROPEAN PATENT APPLICATION

(11) **EP 4 807 927 A1**
(43) Date of publication of application: **16.09.2026**
(21) Application number: 23958234.9
(22) Date of filing: 07.11.2023
(51) Int. Cl.: H02H 3/28, H02J 1/00

(54) **RETURN LINE PROTECTION RELAY, RETURN LINE PROTECTION SYSTEM, AND RETURN LINE PROTECTION METHOD FOR HIGH-VOLTAGE DIRECT CURRENT ELECTRIC POWER TRANSMISSION**

(71) Applicant: Mitsubishi Electric Corporation, Tokyo 100-8310 (JP)
(72) Inventor: ISHIDA, Keisuke, Tokyo 100-8310 (JP); NAKABAYASHI, Takuya, Tokyo 102-0073 (JP)
(74) Representative: Witte, Weller & Partner Patentanwälte mbB
(86) International application number: PCT/JP2023/040085
(87) International publication number: WO 2025/099829

(57) **Abstract**

In a return line protection relay (11), a terminal error correction unit (61) generates a corrected current value by performing a fixed error correction and a proportional error correction on a current value detected at a local end of a return line (4C). A first subtractor (70) calculates a differential current by subtracting, from the corrected current value at the local end, a current value that is detected at a remote end of the return line at the same time as detection of the current value at the local end and that is subjected to the fixed error correction and the proportional error correction. A differential error correction unit (71) calculates an amount of change in the differential current by subtracting, from a value of the differential current at the present time, a value of a past differential current that is limited within a range between an upper limit and a lower limit. A level determination unit (75) outputs an operation signal when an absolute value of the amount of change in the differential current exceeds an operation threshold value.

## Description

### TECHNICAL FIELD

The present disclosure relates to a return line protection relay, a return line protection system, and a return line protection method for high-voltage direct-current (DC) power transmission (HVDC: High Voltage Direct Current).

### BACKGROUND ART

In the HVDC, an alternating-current (AC)/DC converter for connecting to an AC system on the A end side and an AC/DC converter for connecting to an AC system on the B end side are connected by a DC main line and a return line. One end of the return line is grounded at a point of connection to the AC/DC converter.

In the HVDC having the above-described configuration, a current differential relay is generally used to protect the return line. However, since one end of the return line is grounded, if the ground-fault resistance is large or if the distance between a fault point and a ground point is short, a sufficient differential current may not be obtained, and thus, the current differential relay may erroneously fail to operate. On the other hand, if the current differential relay is configured to be highly sensitive in order to prevent it from erroneously failing to operate, there is a possibility that the current differential relay may erroneously operate due to errors in a detection system and a differential operation.

Japanese Patent No. 4406143 (PTL 1) discloses means for preventing a return line protection relay from erroneously failing to operate and from erroneously operating as described above. Specifically, the return line protection relay in this literature includes first computing means and second computing means. The first computing means performs two types of correction processing, i.e., an offset correction and a gain correction, on the current introduced from a DC current transformer to reduce a fixed error and a proportional error occurring in the current. The second computing means computes a differential current that is a sum of the current subjected to correction processing by the first computing means and the current introduced by transmitting means from the other end, computes an amount of change in the differential current based on a difference between the differential current and a differential current obtained at the time in the past earlier by a time period input by settling means, and reduces an amount of error that subsequently occurs. Then, when the amount of change in the differential current satisfies a prescribed relation with respect to a reference value, the second computing means determines that a fault has occurred in the return line.

### CITATION LIST

### PATENT LITERATURE

PTL 1: Japanese Patent No. 4406143

### SUMMARY OF INVENTION

### TECHNICAL PROBLEM

As described above, in the return line protection relay disclosed in Japanese Patent No. 4406143 (PTL 1), the determination about whether or not a fault occurs is made based on the amount of change between the differential current at the present time point and the past differential current at the time point earlier by the settled time period. As a result of detailed studies, the inventors of the present application have found that the protection relay may erroneously operate when the power flow flowing through the return line suddenly changes in a normal state (the detailed reason therefor will be described in the embodiment).

The above-described problem is prominent particularly in the case of a bipolar HVDC system. In the bipolar HVDC system, when the current transmitted through a first-pole HVDC system is equal to the current transmitted through a second-pole HVDC system, the current flowing through the return line is zero. On the other hand, when the current transmitted through the first-pole HVDC system is different from the current transmitted through the second-pole HVDC system, the differential current therebetween flows through the return line. Thus, when the current transmitted through one of the first-pole and second-pole HVDC systems is changed, the return line current suddenly changes.

The present disclosure has been made in view of the above-described problems, and an object thereof is to provide a return line protection relay that is prevented from erroneously operating and from erroneously failing to operate, even when a power flow flowing through a return line of an HVDC suddenly changes.

### SOLUTION TO PROBLEM

In one embodiment, a return line protection relay for protecting a return line of a high-voltage DC power transmission system includes: a terminal error correction unit; a first subtractor; a storage unit; an upper and lower limiter; a second subtractor; and a level determination unit. The terminal error correction unit generates a corrected current value by performing a fixed error correction and a proportional error correction on a current value detected at a local end of the return line. The first subtractor calculates a differential current by subtracting, from the corrected current value at the local end, a current value that is detected at a remote end of the return line at a same time as detection of the current value at the local end and that is subjected to the fixed error correction and the proportional error correction. The storage unit stores the differential currents calculated up to a time earlier than a present time by a prescribed time period. The upper and lower limiter limits a value of a past differential current corresponding to a time earlier than the present time by the prescribed time period to an upper limit when the value of the past differential current exceeds the upper limit, and limits the value of the past differential current to a lower limit when the value of the past differential current is below the lower limit. The second subtractor calculates an amount of change in a differential current by subtracting, from a value of the differential current at the present time, the value of the past differential current that is limited within a range between the upper limit and the lower limit. The level determination unit outputs an operation signal when an absolute value of the amount of change in the differential current exceeds an operation threshold value.

### ADVANTAGEOUS EFFECTS OF INVENTION

According to the return line protection relay in the above-described embodiment, the value of the past differential current limited within the range between the upper limit and the lower limit is subtracted from the value of the differential current at the present time to thereby calculate an amount of change in the differential current, and the absolute value of this amount of change in the differential current is compared with the operation threshold value. Thereby, the return line protection relay can be prevented from erroneously operating and from erroneously failing to operate, also when the power flow suddenly changes.

### BRIEF DESCRIPTION OF DRAWINGS

Fig. 1 is a circuit diagram showing a configuration example of a bipolar HVDC system that is a typical example to which a return line protection relay of the present embodiment is applied.
Fig. 2 is a circuit diagram showing a configuration example of a return line protection system for protecting a DC return line in Fig. 1.
Fig. 3 is a diagram for illustrating a path through which a current flows when a ground fault occurs in a return line.
Fig. 4 is a block diagram showing a hardware configuration example of a return line protection relay in Fig. 2.
Fig. 5 is a block diagram showing a functional configuration of the return line protection system in Fig. 2.
Fig. 6 is a diagram conceptually showing temporal changes in: a return line current in a steady state; an error in a differential current in a steady state; a limit range of an upper and lower limiter; and a differential current during a fault.
Fig. 7 is a flowchart illustrating an operation of the return line protection relay.

### DESCRIPTION OF EMBODIMENTS

Hereinafter, an embodiment will be described in detail with reference to the accompanying drawings. The same or corresponding portions are denoted by the same reference characters, and the description thereof will not be repeated.

### First Embodiment.

### [Configuration Example of Bipolar HVDC System]

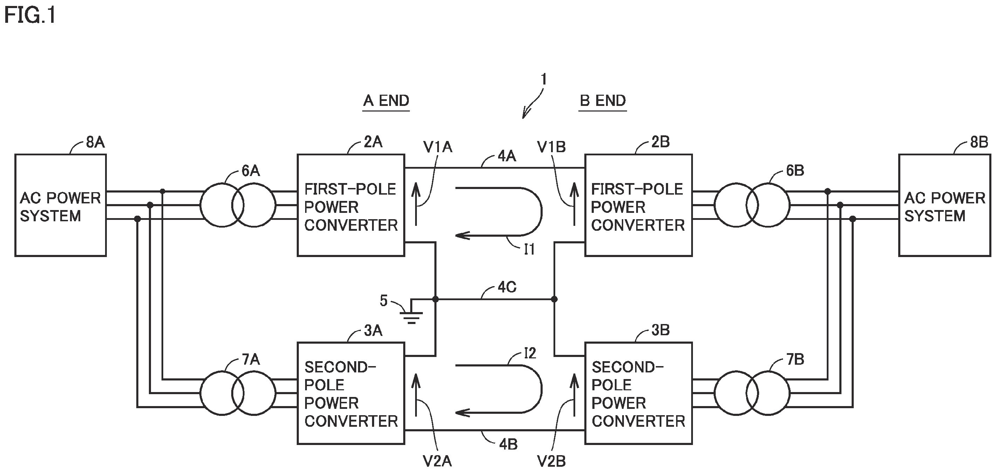

Fig. 1 is a circuit diagram showing a configuration example of a bipolar HVDC system 1 that is a typical example to which a return line protection relay of the present embodiment is applied. In bipolar HVDC system 1, an AC power system 8A provided on the side of an A end and an AC power system 8B provided on the side of a B end are connected through bipolar HVDC system 1. In the present disclosure, the A end is also referred to as a first end, and the B end is also referred to as a second end. Note that the terms the "A end" and the "B end" are merely for the sake of convenience and thus may be interchanged with each other in Fig. 1.

Referring to Fig. 1, bipolar HVDC system 1 includes: first-pole power converters 2A and 2B constituting a first-pole HVDC system; second-pole power converters 3A and 3B constituting a second-pole HVDC system; DC main lines 4A and 4B; a DC return line 4C; and transformers 6A, 6B, 7A, and 7B. In the present disclosure, the DC main line may be simply referred to as a main line, and the DC return line may be simply referred to as a return line.

Each of first-pole power converters 2A and 2B and second-pole power converters 3A and 3B performs bidirectional power conversion between a direct current and an alternating current. Each of power converters 2A, 2B, 3A, and 3B may be a self-excited converter or a separately-excited converter. Herein, the self-excited converter refers to a power converter configured by a semiconductor switching element having a self-extinguishing capability, such as an insulated gate bipolar transistor (IGBT). The separately-excited converter refers to a power converter configured by a semiconductor switching element not having a self-extinguishing capability, such as a thyristor. When each of power converters 2A, 2B, 3A, and 3B is configured by a self-excited converter, it may be a modular multilevel converter (MMC).

A pair of DC terminals of first-pole power converter 2A on the A end side and a pair of DC terminals of first-pole power converter 2B on the B end side are connected to each other through DC main line 4A and DC return line 4C. A pair of DC terminals of second-pole power converter 3A on the A end side and a pair of DC terminals of second-pole power converter 3B on the B end side are connected to each other through DC main line 4B and DC return line 4C. Thus, DC return line 4C is shared by the first-pole HVDC system and the second-pole HVDC system. In the case shown in Fig. 1, the A end of DC return line 4C is connected to a ground 5. On the contrary, the B end of DC return line 4C may be connected to ground 5.

A three-phase AC terminal of first-pole power converter 2A on the A end side and a three-phase AC terminal of second-pole power converter 3A on the A end side are connected to AC power system 8A through transformer 6A and transformer 7A, respectively. A three-phase AC terminal of first-pole power converter 2B on the B end side and a three-phase AC terminal of second-pole power converter 3B on the B end side are connected to AC power system 8B through transformer 6B and transformer 7B, respectively.

Hereinafter, the current flowing through DC return line 4C will be described. The following specifically describes a case where power converters 2A and 3A on the A end side function as rectifiers that convert an alternating current into a direct current, and power converters 2B and 3B on the B end side function as inverters that convert a direct current into an alternating current. In this case, as shown in Fig. 1, a direct current I1 flows due to a potential difference between a DC voltage V1A output from first-pole power converter 2A on the A end side and a DC voltage V1B output from first-pole power converter 2B on the B end side. Further, a direct current I2 flows due to a potential difference between a DC voltage V2A output from second-pole power converter 3A on the A end side and a DC voltage V2B output from second-pole power converter 3B on the B end side. Accordingly, direct current I1 and direct current I2 flow through DC return line 4C in opposite directions. Thus, when the electric power transmitted from first-pole power converter 2A and the electric power transmitted from second-pole power converter 3A are substantially equal to each other, the current flowing through DC return line 4C becomes substantially zero. On the other hand, when the electric power transmitted from second-pole power converter 3A becomes zero, then, in the first-pole HVDC system, the magnitude of the current flowing through DC main line 4A becomes substantially equal to the magnitude of the current flowing through DC return line 4C. Thus, when the electric power transmitted through one of the first-pole and second-pole HVDC systems suddenly changes, the magnitude of the current flowing through the return line also suddenly changes.

### [Configuration Example of Return Line Protection System]

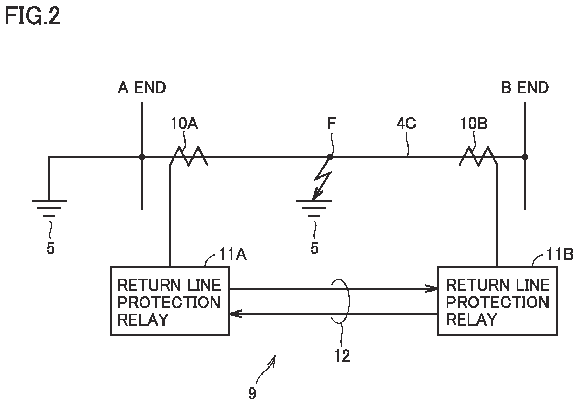

Fig. 2 is a circuit diagram showing a configuration example of a return line protection system 9 for protecting DC return line 4C in Fig. 1. Referring to Fig. 2, return line protection system 9 includes: a DC current transformer 10A provided in the vicinity of the A end of DC return line 4C; a DC current transformer 10B provided in the vicinity of the B end of DC return line 4C; return line protection relays 11A and 11B each configured as a current differential relay; and a communication path 12 through which return line protection relays 11A and 11B are connected through communication. Communication path 12 may be wired or wireless.

Return line protection relay 11A is connected to DC current transformer 10A, and acquires a current value detected at the A end of DC return line 4C by DC current transformer 10A. Return line protection relay 11B is connected to DC current transformer 10B, and acquires a current value detected at the B end of DC return line 4C by DC current transformer 10B at the same time as detection of the current value at the A end.

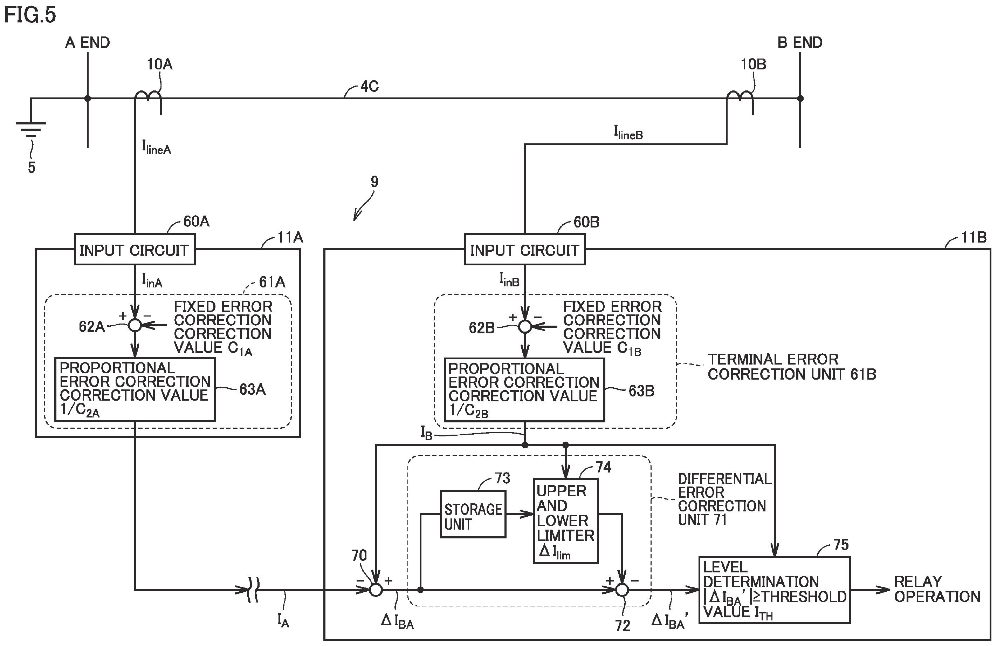

As described in detail with reference to Fig. 5, each of return line protection relays 11A and 11B first performs a fixed error correction and a proportional error correction on the current value detected at its own end (local end). Then, return line protection relay 11A transmits, to return line protection relay 11B, the current detection value having been subjected to the error correction. Return line protection relay 11B computes a differential current between the currents detected at the A and B ends at the same time. Then, return line protection relay 11B performs a differential correction by subtracting the value of the past differential current from the value of the present differential current, and then, determines whether or not a fault occurs based on the value obtained after the differential correction.

The following describes the current values detected by DC current transformers 10A and 10B at the A and B ends when a ground fault occurs at a fault point F in Fig. 2.

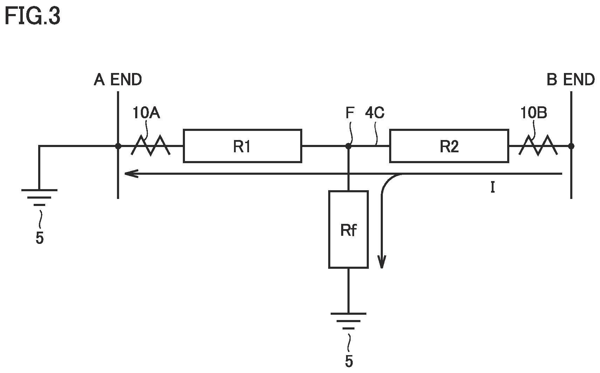

Fig. 3 is a diagram for illustrating a path through which a current flows when a ground fault occurs in a return line. Referring to Fig. 3, it is assumed that a direct current I flows from the B end to the A end before a fault occurs. When a ground fault occurs, direct current I is divided at fault point F. Assuming that a resistance from fault point F to the A end is defined as R1 and a fault resistance is defined as Rf, current I1 detected by DC current transformer 10A at the A end is represented by the following formula (1A). Thus, the differential current is represented by the following formula (1B). $\begin{matrix}I 1 = \frac{Rf}{R 1 + Rf} \times I & \left(1A\right) \\ ΔI = I - I 1 = \frac{R 1}{R 1 + Rf} \times I & \left(1B\right)\end{matrix}$

According to the above-mentioned formulae (1A) and (1B), when the ground fault resistance is large or when the distance between the fault point and the ground point is short, i.e., when R1 is significantly smaller than Rf, the differential current approaches zero, which makes it difficult to detect the differential current. Even in such a case, however, the differential current can still be detected if the magnitude of the original direct current I is considerably large. According to the functional configuration of return line protection system 9 in the present embodiment shown in Fig. 5 described later, it is possible to provide a return line protection system that is prevented from erroneously operating and from erroneously failing to operate even when it is difficult to detect a differential current as described above.

### [Hardware Configuration Example of Return Line Protection Relay]

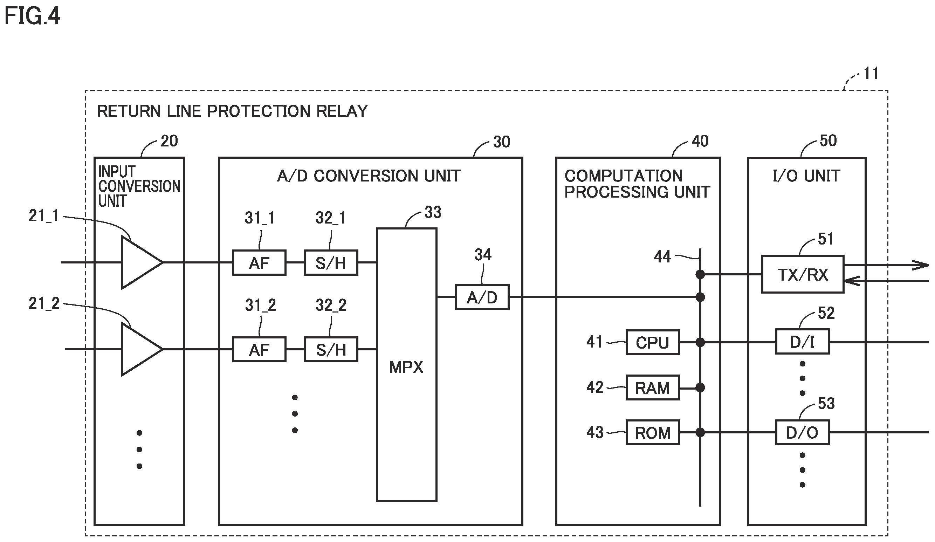

Fig. 4 is a block diagram showing a hardware configuration example of return line protection relays 11A and 11B (hereinafter collectively referred to as a return line protection relay 11) in Fig. 2. Return line protection relay 11 in Fig. 2 has a configuration similar to that of what is called a digital relay device. Specifically, referring to Fig. 2, return line protection relay 11 includes an input conversion unit 20, an analog/digital (A/D) conversion unit 30, a computation processing unit 40, and an input and output (I/O) unit 50.

Input conversion unit 20 includes input converters 21_1, 21_2, ... each including an amplifier, an attenuator, and the like for each input channel. Input conversion unit 20 receives an input of a current signal from DC current transformer 10 in Fig. 1. An input converter 21 converts the input signal into a signal having a voltage level suitable for signal processing in A/D conversion unit 30 and computation processing unit 40.

A/D conversion unit 30 includes analog filters (AF) 31_1, 31_2, ..., sample hold circuits (S/H) 32_1, 32_2, ..., a multiplexer (MPX) 33, and an A/D converter 34. Analog filter 31 and sample hold circuit 32 are provided for each channel of the input signal.

Each analog filter 31 is a low-pass filter or a band-pass filter provided to remove an aliasing error occurring at the time of A/D conversion. Each sample hold circuit 32 samples, at a prescribed sampling frequency, and holds the signal having passed through the corresponding analog filter 31. Multiplexer 33 sequentially selects voltage signals held in sample hold circuits 32_1, 32_2, .... A/D converter 34 converts the signal selected by multiplexer 33 into a digital value. Note that A/D conversion unit 30 may be configured to include a plurality of A/D converters 34 that perform A/D conversions in parallel with each other.

Computation processing unit 40 includes a central processing unit (CPU) 41, a random access memory (RAM) 42, a read only memory (ROM) 43, and a bus 44 connecting them. CPU 41 controls the overall operation of return line protection relay 11. RAM 42 and ROM 43 are each used as a main memory for CPU 41. By using a nonvolatile memory such as a flash memory, ROM 43 stores programs, setting values for signal processing, and the like.

Computation processing unit 40 should only be configured by some type of circuitry, and is not limited to the example in Fig. 2. For example, computation processing unit 40 may include a plurality of CPUs. Further, computation processing unit 40 may be configured by at least one application specific integrated circuit (ASIC) or at least one field programmable gate array (FPGA), in place of a processor such as a CPU. Alternatively, computation processing unit 40 may be configured by a combination of any of a processor, an ASIC, and an FPGA.

I/O unit 50 includes a transceiver (TX/RX) 51, a digital input (D/I) circuit 52, and a digital output (D/O) circuit 53. Transceiver 51 includes a transmitter 51_1 and a receiver 51_2 and communicates, through communication path 12 in Fig. 1, with a transceiver 51 provided in return line protection relay 11 at the other end (remote end). Digital input circuit 52 and digital output circuit 53 are interface circuits through which communication is established between CPU 41 and an external device. For example, digital output circuit 53 outputs a trip signal as an operation signal to a circuit breaker (not shown) on the local end side shown in Fig. 1.

### [Functional Configuration of Return Line Protection System]

Fig. 5 is a block diagram showing a functional configuration of return line protection system 9 in Fig. 2. Referring to Fig. 5, return line protection relay 11A on the A end side includes an input circuit 60A and a terminal error correction unit 61A. Return line protection relay 11B on the B end side includes an input circuit 60B, a terminal error correction unit 61B, a subtractor 70, a differential error correction unit 71, and a level determination unit 75.

Input circuit 60A on the A end side and input circuit 60B on the B end side have the same configuration and each corresponds to input conversion unit 20 and A/D conversion unit 30 in Fig. 4. Input circuit 60A converts, into a digital input current value I_{inA}, a current value I_{lineA} of DC return line 4C that has been detected by DC current transformer 10A on the A end side. Similarly, input circuit 60B converts, into a digital input current value I_{inB}, a return line current value I_{lineB} that has been detected by DC current transformer 10B on the B end side.

Input current value I_{inA} includes a fixed error and a proportional error. The fixed error is also referred to as an offset error, and refers to a divergence that occurs in a certain width irrespective of a true value. The proportional error is also referred to as a gain error, and refers to a divergence that increases or decreases in proportion to a true value. Similarly, input current value I_{inB} also includes a fixed error and a proportional error.

Terminal error correction unit 61A on the A end side reduces the fixed error and the proportional error included in input current value I_{inA}. Specifically, terminal error correction unit 61A includes a subtractor 62A and a multiplier 63A. Subtractor 62A reduces the fixed error by subtracting a correction value C_{1A} corresponding to the fixed error from input current value I_{inA}. Multiplier 63A reduces the proportional error by multiplying input current value I_{inA} by a correction value 1/C_{2A} corresponding to a reciprocal of the proportional error. Terminal error correction unit 61A outputs a corrected current value I_{A} obtained by performing the fixed error correction and the proportional error correction on input current value I_{inA} as described above.

Similarly, terminal error correction unit 61B on the B end side reduces the fixed error and the proportional error included in input current value I_{inB}. Specifically, terminal error correction unit 61B includes a subtractor 62B and a multiplier 63B. Subtractor 62B reduces the fixed error by subtracting a correction value C_{1B} corresponding to the fixed error from input current value I_{inB}. Multiplier 63B reduces the proportional error by multiplying input current value I_{inB} by a correction value 1/C_{2B} corresponding to a reciprocal of the proportional error. Terminal error correction unit 61B outputs a corrected current value I_{B} obtained by performing the fixed error correction and the proportional error correction on input current value I_{inB} as described above.

Subtractor 70 outputs a differential current ΔI_{BA} obtained by subtracting corrected current value I_{A} on the A end side subjected to the error correction from corrected current value I_{B} on the B end side subjected to the error correction. Assuming that the proportional error remaining in corrected current value I_{A} subjected to the error correction is defined as ε_{gainA} and the fixed error is defined as ε_{offsetA}, corrected current value I_{A} is represented as in the following formula (2A) using line current I_{lineA}. Similarly, assuming that the proportional error remaining in corrected current value I_{B} subjected to the error correction is defined as ε_{gainB} and the fixed error is defined as ε_{offsetB}, corrected current value I_{B} is represented as in the following formula (2B) using line current I_{lineB}. In the formulae (2A) and (2B), the current is represented as a function of time t. Thus, differential current ΔI_{BA} output from subtractor 70 is represented by the following formula (2C). $\begin{matrix}{I}_{A} \left(t\right) = \left(1\pm {ε}_{gainA}\right) \times {I}_{lineA} \left(t\right) \pm {ε}_{offsetA} & \left(2A\right) \\ {I}_{B} \left(t\right) = \left(1\pm {ε}_{gainB}\right) \times {I}_{lineB} \left(t\right) \pm {ε}_{offsetB} & \left(2B\right) \\ \begin{matrix}{ΔI}_{BA} \left(t\right) = {I}_{B} \left(t\right) - {I}_{A} \left(t\right) \\ = {I}_{lineB} \left(t\right) - {I}_{lineA} \left(t\right) \pm {ε}_{gainB} \times {I}_{lineB} \left(t\right) \pm {ε}_{gainA} \times {I}_{lineA} \left(t\right) \\ \pm {ε}_{offsetB} \pm {ε}_{offsetA}\end{matrix} & \left(2C\right)\end{matrix}$

In the case where the error included in differential current ΔI_{BA} is maximum, the sign of the error included in corrected current value I_{A} at the A end is opposite to the sign of the error included in corrected current value I_{B} at the B end. Thus, differential current ΔI_{BA} in the case of a maximum error is represented by the following formula (3A). In the steady state, since line current I_{lineA} on the A end side and line current I_{lineB} on the B end side are equal to each other, the formula (3A) is represented as in the formula (3B). $\begin{matrix}\begin{matrix}{ΔI}_{BA} \left(t\right) = {I}_{lineB} \left(t\right) - {I}_{lineA} \left(t\right) + {ε}_{gainA} \times {I}_{lineA} \left(t\right) + {ε}_{gainB} \times {I}_{lineB} \left(t\right) \\ + {ε}_{offsetA} + {ε}_{offsetB}\end{matrix} & \left(3A\right) \\ \begin{matrix}{ΔI}_{BA} \left(t\right) = {ε}_{gainA} \times {I}_{lineA} \left(t\right) + {ε}_{gainB} \times {I}_{lineB} \left(t\right) + {ε}_{offsetA} + {ε}_{offsetB} \\ = \left({ε}_{gainA}+{ε}_{gainB}\right) \times {I}_{lineB} \left(t\right) + {ε}_{offsetA} + {ε}_{offsetB} = Err \left(t\right)\end{matrix} & \left(3B\right)\end{matrix}$

The above formula (3B) represents a positive maximum value Err(t) of the error in a differential current ΔI_{BA}(t) at the present time point that is obtained when a line current I_{lineB}(t) is positive in the steady state. The negative maximum value of the error is represented by -Err(t). As is apparent from the formula (3B), maximum value Err(t) of the error in the differential current increases as line current I_{lineB}(t) increases.

Basically as represented in the following formula (4A), differential error correction unit 71 computes an amount of change ΔI_{BA}'(t) in the differential current by subtracting, from a differential current ΔI_{BA}(t) at the present time point, a past differential current ΔI_{BA}(t-T_{C}) corresponding to the time earlier than the present time point by a prescribed time period T_{C}. Setting time period T_{C} to be a short time period makes it possible to prevent proportional errors ε_{gainA} and ε_{gainB} and fixed errors ε_{offsetA} and ε_{offsetB} from changing between the present time point and the time point earlier than the present time point by time period T_{C}. $\begin{matrix}\begin{matrix}{ΔI}_{BA}^{′} \left(t\right) = {ΔI}_{BA} \left(t\right) - {ΔI}_{BA} \left(t-{T}_{C}\right) \\ = \left[{ε}_{gainA}\times {I}_{lineA}\left(t\right)+{ε}_{gainB}\times {I}_{lineB}\left(t\right)+{ε}_{offsetA}+{ε}_{offsetB}\right] \\ - \left[{ε}_{gainA}\times {I}_{lineA}\left(t-{T}_{C}\right)+{ε}_{gainB}\times {I}_{lineB}\left(t-TC\right)+{ε}_{offsetA}+{ε}_{offsetB}\right] \\ = {ε}_{gainA} \times \left[{I}_{lineA}\left(t\right)-{I}_{lineA}\left(t-{T}_{C}\right)\right] + {ε}_{gainB} \times \left[{I}_{lineB}\left(t\right)-{I}_{lineB}\left(t-{T}_{C}\right)\right]\end{matrix} & \left(4A\right) \\ {ΔI}_{BA}^{′} \left(t\right) = \left({ε}_{gainA}+{ε}_{gainB}\right) \times \left[{I}_{lineB}\left(t\right)-{I}_{lineB}\left(t-{T}_{C}\right)\right] & \left(4B\right)\end{matrix}$

In the steady state, since line current I_{lineA} on the A end side is equal to line current I_{lineB} on the B end side, the above formula (4A) is modified as in the above formula (4B). As represented in the above formula (4B), fixed errors ε_{offsetA} and ε_{offsetB} are removed from the amount of change ΔI_{BA}'(t) in the differential current. Thus, the amount of change ΔI_{BA}'(t) in the differential current depends only on proportional errors ε_{gainA} and ε_{gainB}.

As described above, proportional errors ε_{gainA} and ε_{gainB} are reduced in terminal error correction units 61A and 61B. However, when the change in power flow during time period Tc, i.e., |I_{lineB}(t) - I_{lineB}(t-T_{C})|, is large, the error included in the amount of change ΔI_{BA}'(t) in the differential current increases. Thus, an upper and lower limiter 74 is provided in order to prevent return line protection relay 11B from erroneously operating due to an increase in error.

Specifically, differential error correction unit 71 includes a subtractor 72, a storage unit 73, and an upper and lower limiter 74. Storage unit 73 stores the calculated value of differential current ΔI_{BA} up to the time earlier than the present time point by a certain time period. Storage unit 73 outputs the value of past differential current ΔI_{BA}(t-T_{C}) corresponding to the time earlier by prescribed time period T_{C}.

When the value of past differential current ΔI_{BA}(t-T_{C}) corresponding to the time earlier by time period T_{C} that is output from storage unit 73 exceeds an upper limit ΔIₗᵢₘ(t), upper and lower limiter 74 limits the value of past differential current ΔI_{BA}(t-T_{C}) to upper limit ΔIₗᵢₘ(t). Also, when the value of past differential current ΔI_{BA}(t-T_{C}) is below a lower limit -ΔIₗᵢₘ(t), upper and lower limiter 74 limits the value of past differential current ΔI_{BA}(t-T_{C}) to lower limit -ΔIₗᵢₘ(t). On the other hand, when the value of past differential current ΔI_{BA}(t-T_{C}) falls within a range between upper limit ΔIₗᵢₘ(t) and lower limit -ΔIₗᵢₘ(t), upper and lower limiter 74 outputs the value of past differential current ΔI_{BA}(t-T_{C}) without changing the value.

Herein, a limit width ΔIₗᵢₘ(t) defining upper limit ΔIₗᵢₘ(t) and lower limit -ΔIₗᵢₘ(t) is indicated by a value obtained by multiplying, by an absolute value of a limit coefficient Lim, an absolute value of a corrected current value I_{B}(t) at the present time point that is output from terminal error correction unit 61B, as represented in the following formula (5A). As represented in the following formula (5B), limit coefficient Lim is defined as a value obtained by dividing a maximum value Err of the error in differential current ΔI_{BA} that occurs according to return line current I_{lineB} by the value of return line current I_{lineB} corresponding to the case where maximum value Err of this error is obtained. $\begin{matrix}Limit width : {ΔI}_{lim} \left(t\right) = \left|{I}_{B}\left(t\right)\right| \times \left|Lim\right| & \left(5A\right) \\ Limit coefficient : Lim = \frac{Maximum value Err of error in differential current {ΔI}_{BA} \left(theoretical value, experimental value\right)}{corresponding return line current {I}_{lineB}} & \left(5B\right)\end{matrix}$

Maximum value Err of the error in differential current ΔI_{BA} is as represented in the formula (3B). This value may be theoretically obtained or may be a maximum value obtained by a plurality of experiments performed for each of the values of different return line currents I_{lineB}.

Subtracter 72 calculates an amount of change ΔI_{BA}'(t) in the differential current by subtracting the output value of upper and lower limiter 74 from the value of differential current ΔI_{BA}(t) at the present time point. Herein, upper and lower limiter 74 outputs a value obtained by limiting the value of past differential current ΔI_{BA}(t-T_{C}) corresponding to the time earlier by time period T_{C} that is output from storage unit 73, such that this value of past differential current ΔI_{BA}(t-T_{C}) falls within a range between upper limit ΔIₗᵢₘ(t) and lower limit -ΔIₗᵢₘ(t).

When an amount of change ΔI_{BA}' in the differential current output from subtractor 72 is equal to or greater than an operation threshold value I_{TH}, level determination unit 75 outputs a relay operation signal (i.e., a trip signal of the circuit breaker). Herein, operation threshold value I_{TH} is set to be a certain value so as to prevent an erroneous operation from occurring even when the error in differential current ΔI_{BA}(t) is relatively large, and so as to prevent an erroneous failure to operate even when the absolute value of return line current I_{lineB} is relatively small.

### [Prevention of Erroneous Operation of Return Line Protection Relay]

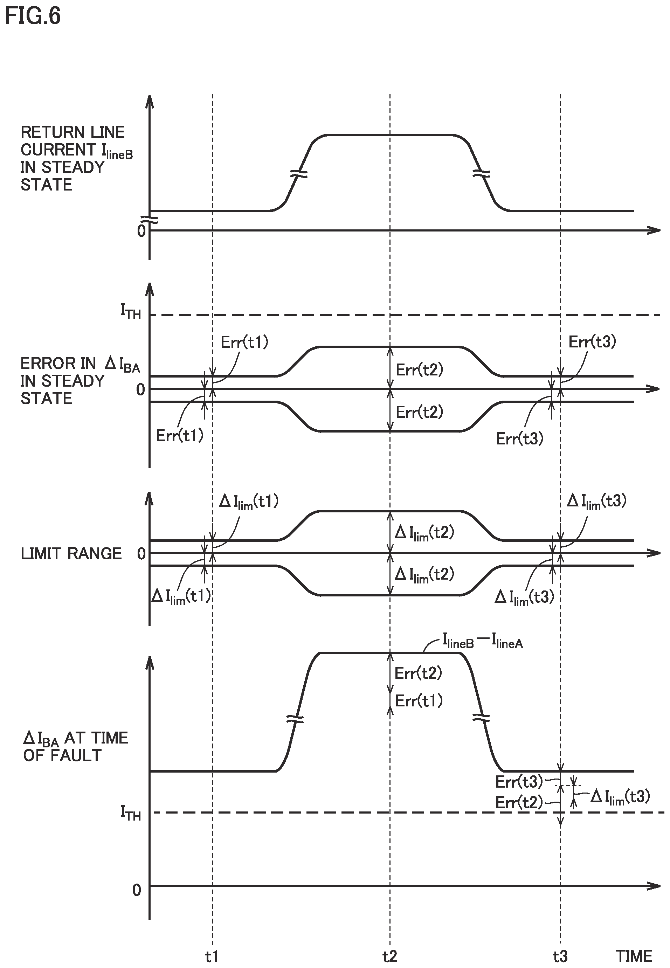

Fig. 6 is a diagram conceptually showing temporal changes in: a return line current in a steady state; an error in a differential current in a steady state; a limit range of an upper and lower limiter; and a differential current during a fault. The graph in Fig. 6 is conceptual, and the scales of the vertical and horizontal axes are not proportional to actual values. Hereinafter, the operation of return line protection relay 11 in the present embodiment will be further described with reference to Fig. 6.

As shown in Fig. 6, return line current value I_{lineB} changes over time in a steady state in which no fault occurs. Specifically, return line current value I_{lineB} increases between time t1 and time t2, and return line current value I_{lineB} decreases between time t2 and time t3. For simplicity, the value of return line current I_{lineB} is positive in Fig. 6.

As described with reference to the formula (3B), the absolute value of maximum value Err of the error included in differential current ΔI_{BA} in the steady state increases as the absolute value of return line current value I_{lineB} increases. In the case in Fig. 6, return line current value I_{lineB} is relatively large in the vicinity of time t2. Thus, the positive maximum value (Err) and the negative maximum value (-Err) of the error included in differential current ΔI_{BA} are also relatively large. On the other hand, return line current value I_{lineB} is relatively small in the vicinities of time t1 and time t3. Thus, the positive maximum value (Err) and the negative maximum value (-Err) of the error included in differential current ΔI_{BA} are also relatively small.

As described with reference to the formulae (5A) and (5B), a limit width ΔIₗᵢₘ used in upper and lower limiter 74 changes in proportion to the absolute value of corrected current value I_{B} (i.e., return line current value I_{lineB}) output from terminal error correction unit 61B. Accordingly, in the case in Fig. 6, in the vicinity of time t2, return line current I_{lineB} is relatively large, and thus, limit width ΔIₗᵢₘ is also relatively large. On the other hand, in the vicinities of time t1 and time t3, return line current I_{lineB} is relatively small, and thus, limit width ΔIₗᵢₘ is also relatively small. In the case in Fig. 6, limit width ΔIₗᵢₘ is by way of example set to be approximately equal to the absolute value of maximum value Err of the error included in differential current ΔI_{BA} in the steady state.

As described with reference to Fig. 3, the value of differential current ΔI_{BA}(t) appearing at the time of the ground fault in return line 4C differs depending on the value of return line current I_{lineB}. Specifically, as shown in Fig. 6, the above-mentioned value of differential current ΔI_{BA}(t) is larger as the value of return line current I_{lineB} is larger. Herein, referring to the above-mentioned formulae (3A) and (3B), the value of differential current ΔI_{BA} at the time of a fault is represented as a value obtained by adding or subtracting an error to or from a difference (I_{lineB} - I_{lineA}) between the return line currents detected at both ends of return line 4C. The maximum value of the error is Err(t).

On the other hand, the amount of change ΔI_{BA}' in the differential current at the time of the ground fault in return line 4C is represented as a value obtained by subtracting, from differential current ΔI_{BA}(t) at the time of the fault at the present time point, differential current ΔI_{BA}(t-T_{C}) in the normal state at the time earlier than a present time point t by time period T_{C}. Return line protection relay 11 in the present embodiment is configured such that the amount of change ΔI_{BA}' in the differential current at the time of the fault does not become less than operation threshold value I_{TH} even when the power flow significantly changes, i.e., such that return line protection relay 11 is prevented from erroneously failing to operate. This will be specifically described with reference to an example in Fig. 6.

First, assuming that the present time is defined as t3, the time earlier than the present time by a prescribed time period T_{C} is defined as t2. In this case, the detection value of differential current ΔI_{BA} at present time t3 is a value obtained by adding or subtracting an error to or from the differential value (I_{lineB} - I_{lineA}, i.e., the fault current) between the return line currents at both ends of return line 4C. Since the maximum value of the error is Err(t3), the detection value of differential current ΔI_{BA} at present time t3 becomes I_{lineB} - I_{lineA} - Err(t3) in the case of the lowest value. On the other hand, at time t2 earlier than present time t2 by prescribed time period T_{C}, the differential value (I_{lineB} - I_{lineA}) between the return line currents at both ends of return line 4C in the steady state is 0. Thus, the detection value of differential current ΔI_{BA} at time t2 is equal to Err(t2) in the case of the maximum value. If upper and lower limiter 74 is not provided, the amount of change ΔI_{BA}' in the differential current becomes I_{lineB} - I_{lineA} - Err(t3) - Err(t2) in the case of the lowest value, and thus, becomes less than operation threshold value I_{TH}. Accordingly, return line protection relay 11 erroneously fails to operate. On the other hand, if upper and lower limiter 74 is provided, the detection value of a differential current ΔI_{BA}(t2) corresponding to the time earlier than the present time point by prescribed time period T_{C} is limited to the limit range limited by a limit width ΔIₗᵢₘ(t3) at the present time point. As a result, even in the case of the lowest value, the amount of change ΔI_{BA}' in the differential current becomes I_{lineB} - I_{lineA} - Err(t3) - ΔIₗᵢₘ(t3) and thus becomes equal to or greater than operation threshold value I_{TH}. Therefore, return line protection relay 11 is prevented from erroneously failing to operate.

Next, assuming that the present time is defined as t2, the time earlier than the present time by prescribed time period T_{C} is defined as t1. In this case, the detection value of differential current ΔI_{BA} at present time t2 is a value obtained by adding or subtracting an error to or from the differential value (I_{lineB} - I_{lineA}, i.e., a fault current) between the return line currents at both ends of return line 4C. The maximum value of the error is Err(t2). Accordingly, the detection value of differential current ΔI_{BA} at present time t2 becomes I_{lineB} - I_{lineA} - Err(t2) in the case of the lowest value. On the other hand, at time t1 earlier than present time t2 by prescribed time period T_{C}, the differential value (I_{lineB} - I_{lineA}) between the return line currents at both ends of return line 4C in the steady state is 0. Therefore, the detection value of differential current ΔI_{BA} at time t1 is equal to an error maximum value Err(t1) in the case of the maximum value. Since a limit width ΔIₗᵢₘ(t2) at the present time point is set to be relatively large according to the value of return line current I_{lineB} at present time t2, upper and lower limiter 74 outputs the value of a differential current ΔI_{BA}(t1) corresponding to the time earlier by time period T_{C} without changing this value. As a result, the amount of change ΔI_{BA}' in the differential current becomes I_{lineB} - I_{lineA} - Err(t2) - Err(t1) in the case of the lowest value. However, the differential value (I_{lineB} - I_{lineA}, i.e., the fault current) between the return line currents at both ends of return line 4C becomes significantly large according to return line current value I_{lineB} at present time t2. Thus, an amount of change ΔI_{BA}'(t2) in the differential current cannot be less than operation threshold value I_{TH}. Therefore, return line protection relay 11 is prevented from erroneously failing to operate.

### [Summary of Operation of Return Line Protection Relay]

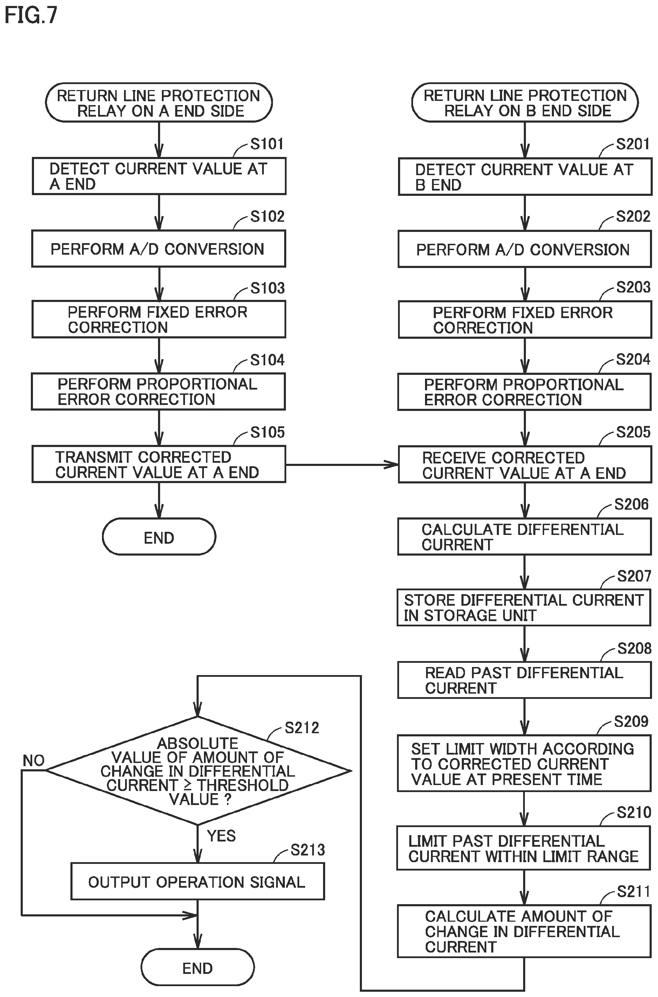

Fig. 7 is a flowchart illustrating the operation of return line protection relay 11. Fig. 7 shows the operations, in one computation cycle, of return line protection relay 11A on the A end side of DC return line 4C and return line protection relay 11B on the B end side of DC return line 4C. The following is a summary of the above description about the operation of return line protection relay 11 with reference to Fig. 7.

In step S101, return line protection relay 11A on the A end side detects current value I_{lineA} at the A end of DC return line 4C through DC current transformer 10A. Similarly, in step S201, return line protection relay 11B on the B end side detects current value I_{lineB} at the B end at the same time as detection of the current at the A end through DC current transformer 10B.

In next step S102, return line protection relay 11A on the A end side performs A/D conversion on the detected current value I_{lineA} at the A end to generate a digital input current value I_{inA}. Further, return line protection relay 11A on the A end side performs the fixed error correction on digital input current value I_{inA} in next step S103, and performs the proportional error correction on digital input current value I_{inA} in next step S104. In next step S105, return line protection relay 11A on the A end side transmits corrected current value I_{A} subjected to the error correction to return line protection relay 11B on the B end side.

Similarly, in step S202, return line protection relay 11B on the B end side performs A/D conversion on the detected current value I_{lineB} at the B end to generate digital input current value I_{inB}. Further, return line protection relay 11B on the B end side performs the fixed error correction on digital input current value I_{inB} in next step S203, and performs the proportional error correction on digital input current value I_{inB} in next step S204. In next step S205, return line protection relay 11B on the B end side receives corrected current value I_{A} that has been subjected to the error correction and transmitted from return line protection relay 11A on the A end side.

In next step S206, return line protection relay 11B on the B end side calculates differential current ΔI_{BA} by subtracting corrected current value I_{A} at the A end from corrected current value I_{B} at the B end of DC return line 4C. In next step S207, return line protection relay 11B on the B end side causes storage unit 73 to store the calculated differential current ΔI_{BA}. Storage unit 73 stores differential current ΔI_{BA} calculated in a time period from the time point earlier than the present time point by prescribed time period T_{C} to the present time point.

In next step S208, return line protection relay 11B on the B end side reads, from storage unit 73, past differential current ΔI_{BA}(t-T_{C}) calculated at the time earlier than the present time point by prescribed time period T_{C}. Then, return line protection relay 11B on the B end side sets limit width ΔIₗᵢₘ to be a value corresponding to the present corrected current value I_{B} at the B end (step S209), and then limits this read past differential current ΔI_{BA}(t-T_{C}) to fall within a limit range (i.e., -ΔIₗᵢₘ to +ΔIₗᵢₘ) (step S210). In other words, when the value of past differential current ΔI_{BA}(t-T_{C}) is within the limit range, this value of past differential current ΔI_{BA} is used without being changed. Also, when the value of past differential current ΔI_{BA}(t-T_{C}) is out of the limit range, upper limit ΔIₗᵢₘ or lower limit -ΔIₗᵢₘ is used instead.

In next step S211, return line protection relay 11B on the B end side calculates the amount of change ΔI_{BA}' in the differential current by subtracting past differential current ΔI_{BA}(t-T_{C}) limited within the limit range from the present differential current ΔI_{BA}(t). Then, return line protection relay 11B on the B end side compares the absolute value of the calculated amount of change ΔI_{BA}' in the differential current with operation threshold value I_{TH} (step S212). As a result, when the absolute value of the amount of change ΔI_{BA}' in the differential current is equal to or greater than operation threshold value I_{TH} (YES in step S212), return line protection relay 11B on the B end side outputs an operation signal (for example, a trip signal of the circuit breaker) in next step S213, and then, ends the process.

### [Effects of the Present Embodiment]

As described above, by adopting a difference from the past differential current with respect to the differential current between both ends of the return line in the HVDC system, return line protection relay 11 in the present embodiment is prevented from erroneously operating and from erroneously failing to operate. In this case, the error increases when the power flow in the steady state (i.e., in the state in which no fault occurs) suddenly changes. Return line protection relay 11 in the present embodiment limits the value of the past differential current to the upper limit when the value of the past differential current exceeds the upper limit, and also limits the value of the past differential current to the lower limit when the value of the past differential current is below the lower limit. Then, return line protection relay 11 in the present embodiment calculates the amount of change in the differential current by subtracting, from the value of the differential current at the present time, the value of the past differential current that is limited within the range between the upper and lower limits. By comparing the absolute value of the amount of change in the differential current calculated in this way with the operation threshold value, it is possible to suppress an increase in error resulting from a sudden change in the power flow, so that return line protection relay 11 can be prevented from erroneously operating and from erroneously failing to operate.

### [Modifications]

Limit coefficient Lim in the formula (5A) may be determined based on operation threshold value I_{TH}. In other words, the value that is set as limit coefficient Lim is obtained by dividing the result of subtraction of a margin from operation threshold value I_{TH} by the maximum value of an absolute value |I_{B}| of the correction current, as represented in the following formula (6). Thereby, the amount of change ΔI_{BA}' in the differential current in the steady state can be prevented from exceeding operation threshold value I_{TH}, and also, the amount of change ΔI_{BA}' in the differential current at the time of a fault can be prevented from becoming less than operation threshold value I_{T}.
[Math. 6] $Limit coefficient : Lim = \frac{operation threshold value {I}_{TH} \left[A\right] - margin \left[A\right]}{maximum value \left[A\right] of absolute value \left|{I}_{B}\right| of correction current}$

It should be understood that the embodiment disclosed herein is illustrative and non-restrictive in every respect. The scope of the present application is defined by the terms of the claims, rather than the description above, and is intended to include any modifications within the scope and meaning equivalent to the terms of the claims.

### REFERENCE SIGNS LIST

1 bipolar HVDC system, 2A, 2B, 3A, 3B power converter, 4A, 4B DC main line, 4C DC return line, 5 ground, 6A, 6B, 7A, 7B transformer, 8A, 8B AC power system, 9 return line protection system, 10A, 10B DC current transformer, 11A, 11B return line protection relay, 12 communication path, 20 input conversion unit, 21 input converter, 30 A/D conversion unit, 31 analog filter, 32 sample hold circuit, 33 multiplexer, 34 A/D converter, 40 computation processing unit, 41 CPU, 42 RAM, 43 ROM, 44 bus, 50 I/O unit, 51 transceiver, 52 digital input circuit, 53 digital output circuit, 60A, 60B input circuit, 61A, 61B terminal error correction unit, 62A, 62B, 70, 72 subtractor, 63A, 63B multiplier, 71 differential error correction unit, 73 storage unit, 74 upper and lower limiter, 75 level determination unit, Err error, F fault point, I_{A}, I_{B} corrected current value, I_{TH} operation threshold value, I_{inA}, I_{inB} input current value, I_{lineA}, I_{lineB} return line current value, Lim limit coefficient, T_{C} time period, ΔI_{BA} differential current, ΔI_{BA}' amount of change in differential current.

## Claims

1. A return line protection relay for protecting a return line of a high-voltage DC power transmission system, the return line protection relay comprising:
a terminal error correction unit to generate a corrected current value by performing a fixed error correction and a proportional error correction on a current value detected at a local end of the return line;
a first subtractor to calculate a differential current by subtracting, from the corrected current value at the local end, a current value that is detected at a remote end of the return line at a same time as detection of the current value at the local end and that is subjected to the fixed error correction and the proportional error correction;
a storage unit to store the differential currents calculated up to a time earlier than a present time by a prescribed time period;
an upper and lower limiter to:
limit a value of a past differential current corresponding to a time earlier than the present time by the prescribed time period to an upper limit when the value of the past differential current exceeds the upper limit; and
limit the value of the past differential current to a lower limit when the value of the past differential current is below the lower limit;
a second subtractor to calculate an amount of change in a differential current by subtracting, from a value of the differential current at the present time, the value of the past differential current that is limited within a range between the upper limit and the lower limit; and
a level determination unit to output an operation signal when an absolute value of the amount of change in the differential current exceeds an operation threshold value.

2. The return line protection relay for high-voltage DC power transmission according to claim 1, wherein a limit width that defines the upper limit and the lower limit is larger as an absolute value of the corrected current value at the local end at the present time is larger.

3. The return line protection relay for high-voltage DC power transmission according to claim 2, wherein
the limit width is obtained by multiplying the absolute value of the corrected current value at the local end at the present time by an absolute value of a limit coefficient, and
the limit coefficient is obtained by dividing a maximum value of an error in the differential current by a current value detected at the local end of the return line in a case where the maximum value of the error in the differential current is detected.

4. The return line protection relay for high-voltage DC power transmission according to claim 2, wherein
the limit width is obtained by multiplying the absolute value of the corrected current value at the local end at the present time by an absolute value of a limit coefficient, and
the limit coefficient is obtained by dividing, by a maximum value of the absolute value of the corrected current value, a value obtained by subtracting a margin from the operation threshold value.

5. A return line protection system for protecting a return line of a high-voltage DC power transmission system, the return line protection system comprising:
a first DC current transformer to detect a current value at a first end of the return line;
a first return line protection relay to generate a first corrected current value by performing a fixed error correction and a proportional error correction on the current value detected at the first end, and output the generated first corrected current value;
a second DC current transformer to detect a current value at a second end of the return line; and
the return line protection relay according to any one of claims 1 to 4, the return line protection relay serving as a second return line protection relay to receive the current value detected at the second end and receive the first corrected current value output from the first return line protection relay.

6. A return line protection method for protecting a return line of a high-voltage DC power transmission system, the return line protection method comprising:
generating, by a processor, a corrected current value by performing a fixed error correction and a proportional error correction on a current value detected at a local end of the return line;
calculating, by the processor, a differential current by subtracting, from the corrected current value at the local end, a current value that is detected at a remote end of the return line at a same time as detection of the current value at the local end and that is subjected to the fixed error correction and the proportional error correction;
causing, by the processor, a storage unit to store the differential currents calculated up to a time earlier than a present time by a prescribed time period;
limiting, by the processor, a value of a past differential current corresponding to a time earlier than the present time by the prescribed time period to an upper limit when the value of the past differential current exceeds the upper limit, and limiting, by the processor, the value of the past differential current to a lower limit when the value of the past differential current is below the lower limit;
calculating, by the processor, an amount of change in the differential current by subtracting, from the value of the differential current at the present time, the value of the past differential current that is limited within a range between the upper limit and the lower limit; and
outputting, by the processor, an operation signal when an absolute value of the amount of change in the differential current exceeds an operation threshold value.
